Europäisches Patentamt

European Patent Office

Office européen des brevets

(11) Publication number: **0 232 905**
**A2**

## (12) EUROPEAN PATENT APPLICATION

(21) Application number: **87101869.3**

(22) Date of filing: **11.02.87**

(51) Int. Cl.⁴: **H04N 1/387**

(30) Priority: **12.02.86 JP 26701/86**
**12.02.86 JP 26702/86**
**12.02.86 JP 26703/86**

(43) Date of publication of application:
**19.08.87 Bulletin 87/34**

(84) Designated Contracting States:
**DE FR GB**

(71) Applicant: **HITACHI, LTD.**
**6, Kanda Surugadai 4-chome**
**Chiyoda-ku Tokyo 101(JP)**

(72) Inventor: **Hirose, Etsuro**
**5-12, Kawaragocho-2-chome**
**Hitachi-shi(JP)**
Inventor: **Tsubaki, Toshio**
**22-5, Suwacho-5-chome**
**Hitachi-shi(JP)**
Inventor: **Tokunaga, Takeshi**
**2577-224, Kawajiricho**
**Hitachi-shi(JP)**
Inventor: **Hayashi, Seiichi**
**214-74, Motoyoshidacho**
**Mito-shi(JP)**
Inventor: **Inoue, Masataka**
**34-10, Kujicho-1-chome**
**Hitachi-shi(JP)**
Inventor: **Tatsuno, Yujiro**
**2-14, Kokubuncho-2-chome**
**Hitachi-shi(JP)**
Inventor: **Tachibana, Kazuhiro**
**4-25, Kokubuncho-2-chome**
**Hitachi-shi(JP)**
Inventor: **Kimura, Masahiro**
**Sakuragawaryo 1-3, Kokubuncho-2-chome**
**Hitachi-shi(JP)**
Inventor: **Kanai, Yoshio**
**214-74, Kokubuncho**
**Hitachi-shi(JP)**

(74) Representative: **Altenburg, Udo, Dipl.-Phys. et al**
**Patent- und Rechtsanwälte**
**Bardehle-Pagenberg-Dost-Altenburg-Frohwitter & Partner Postfach 86 06 20**
**D-8000 München 86(DE)**

(54) Multi-function personal word processor.

(57) A multi-function personal word processor comprises a main body (l; 101; 201) equipped with at least a keyboard (2, 3; 102, 103; 202, 203), a display device (6; 106; 206) for displaying contents of information inputted through the keyboard, and a printer (9; 109; 209) capable of printing out the contents displayed on the display device, further including an image scanner (8; 108; 208) capable of inputting image information of hand-written characters and/or graphic pattern, wherein the contents of information inputted through the image scanner is combined with the contents of information inputted through the keyboard to be displayed on the display device, the combined contents being printed out by the printer. The word processor allows desired characters and graphic patterns to be edited in desired layouts in an arbitrary manner.

FIG. 3

## MULTI-FUNCTION PERSONAL WORD PROCESSOR

### BACKGROUND OF THE INVENTION

The present invention relates to a multi-function personal word processor imparted with a function capable of inputting information of hand-written images. More particularly, the invention concerns a multi-function personal word processor suited advantageously for creating documents such as postcard and the like.

In the hitherto known word processor of the type mentioned above such as the one disclosed in Japanese Patent Application Laid-Open No. 20231/1985 (JP-A-60-20231), only a keyboard is provided as the input means. As a consequence, it is impossible to input image information of hand-written characters and/or graphic patterns. In other words, the hitherto known personal word processor can output only the characters and patterns of previously determined forms in predetermined layouts.

Thus, with the prior art technique, it was impossible to create printed documents of high individuality with desired characters and graphic patterns of given styles in desired layouts in an arbitrary manner, because the user is not allowed to edit at his or her own will the hand-written characters and graphic patterns.

### SUMMARY OF THE INVENTION

It is an object of the present invention to overcome the inconveniences of the prior art word processor described above and to provide a multi-function personal word processor which is capable of creating printed matters such as postcards which can enjoy high individuality.

According to an aspect of the present invention, there is provided a multi-function personal word processor which comprises a main body case accommodating at least a keyboard, a display device for displaying contents of information inputted through the keyboard, and a printer capable of printing out the contents displayed on the display device, the processor further including an image scanner capable of inputting image information of hand-written characters and/or graphic patterns, wherein the contents of information inputted through the image scanner is combined with the contents of information inputted through the keyboard to be displayed on the display device, the combined contents being printed out by the printer.

### BRIEF DESCRIPTION OF THE DRAWINGS

Figs. l to 8 are views showing a multi-function personal word processor according to a first embodiment of the present invention, in which:

Fig. l is a perspective view showing the same in the state in which a cover is closed;

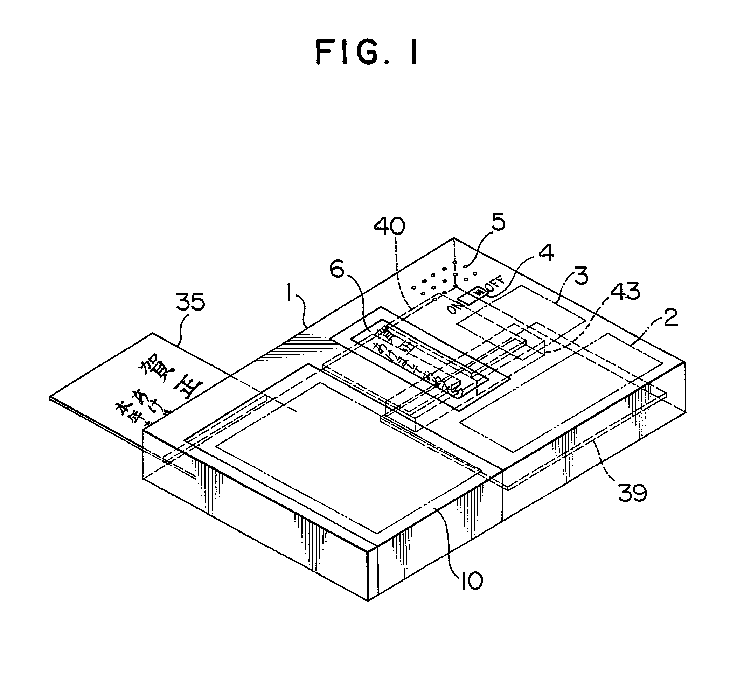

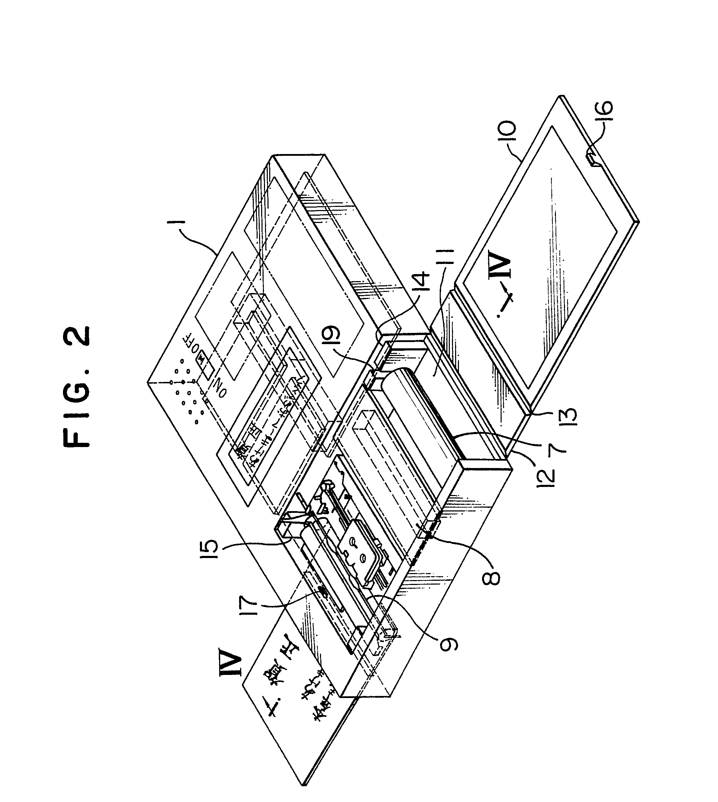

Fig. 2 is a view similar to Fig. l but shows the same in the state in which the cover is opened;

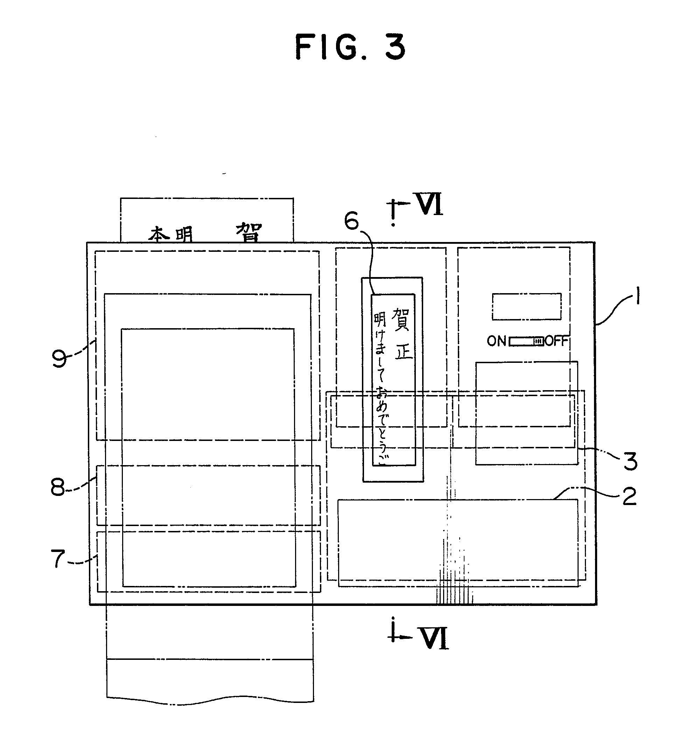

Fig. 3 is a top plan view of the same;

Fig. 4 is a sectional view taken along the line IV-IV in Fig. 2;

Fig. 5 is a schematic view for illustrating the principle of an image scanner incorporated in the word processor;

Fig. 6 is a sectional view taken along the line VI-VI in Fig. 3;

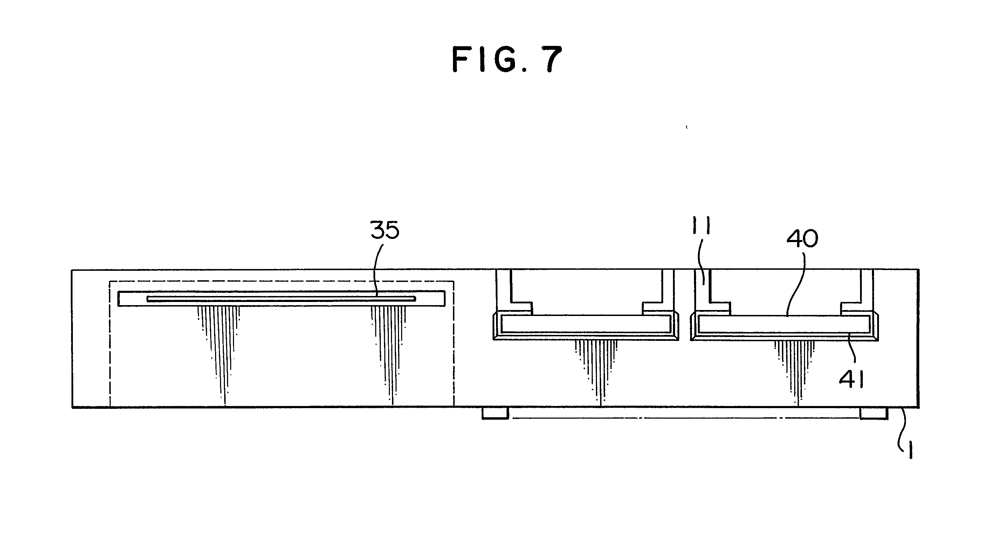

Fig. 7 is a rear side view of the same; and

Fig. 8 is a functional block diagram of the same.

Figs. 9 to l4 are views showing a multi-function personal word processor according to a second embodiment of the present invention, in which:

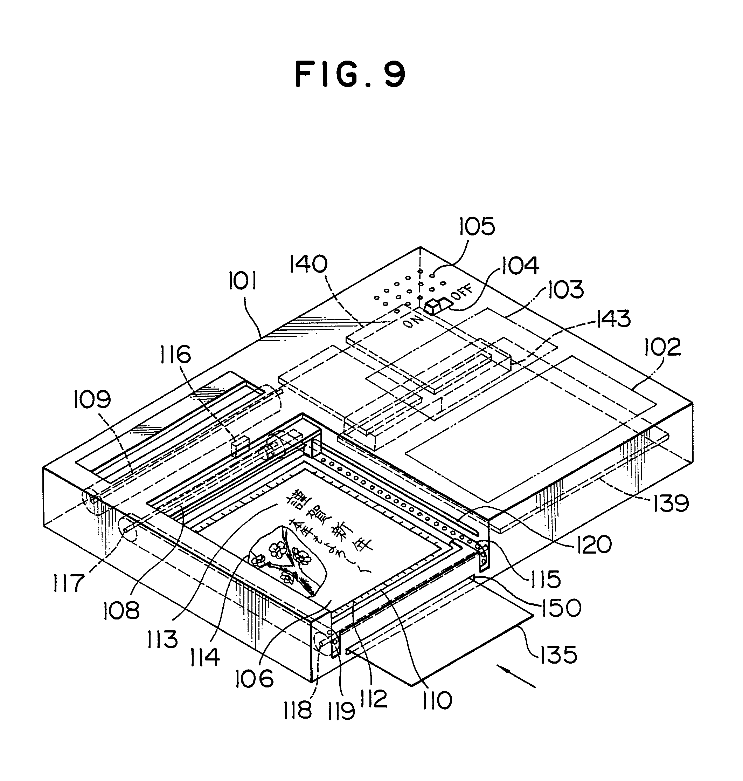

Fig. 9 is a perspective view of the same;

Fig. l0 is a top plan view;

Fig. ll is a sectional view taken along the line XI-XI in Fig. l0;

Fig. l2 is a sectional view taken along the line XII-XII in Fig. l0;

Fig. l3 is a schematic view for illustrating an image scanner incorporated in the processor according to the second embodiment;

Fig. l4 is a rear side view of the same.

Figs. l5 to l9 are views showing a third embodiment of the present invention, in which:

Fig. l5 is a perspective view of the same;

Fig. l6 is a perspective view of the same with a portion being broken away;

Fig. l7 is a top plan view of the same;

Fig. l8 is a sectional view taken along the line XVIII-XVIII in Fig. l7; and

Fig. l9 is a schematic view for illustrating the principle of an image scanner as employed.

### DESCRIPTION OF THE PREFERRED EMBODIMENTS

In the following, the present invention will be described in conjunction with exemplary embodiments thereof by reference to the accompanying drawings.

Referring to Figs. I to 8 which show a first embodiment of the invention, a reference numeral I denotes generally a main body case I of a multi-function personal word processor in which a keyboard 2 used for manually inputting characters and simbols, a keyboard 3 used for manually inputting numerals and the like data, a main switch 4, a perforated region 5 for a speaker which is used for announcing selected information and a display device 6 such as a liquid crystal display of an elongated configuration having the longitudinal axis extending from the front toward the rear side are disposed in the top panel of the case I at a right half portion thereof.

On the other hand, at a left half portion of the top panel of the case I, there are mounted a paper feed roller 7 for feeding a paper used for writing memorandum, an image scanner 8 serving as an image information input device, a heat-sensitive transfer type printer 9 serviing as an output device in this order as viewed from the front side in Figs. I, 2 and 3.

The paper feed roller 7, the image scanner 8 and the printer 9 are covered by a cover I0 which can be used also as an underlay pad when memorandum is written. The cover I0 is formed integrally with a bottom base II of the case I. The case I, the cover I0 and the bottom base II may be made of a synthetic region.

The cover I0 is mounted bendably or foldably about hinge portions I2 and I3 which are realized by thin portions or grooves formed in the cover. Additionally, the closing position of the cover I0 is set by means of plural stoppers I4 and I5 formed in the bottom base II.

The cover I0 has a projection I6 formed integrally therewith. By engaging the projection I6 in a retaining slot I7 formed in the main body case I, the cover I0 can be secured in the position to cover the paper feed roller 7, the image scanner 8 and the printer 9.

The paper feed roller 7 is supported rotatably by means of a shaft I8 received in grooves I9 formed in the stopper I8.

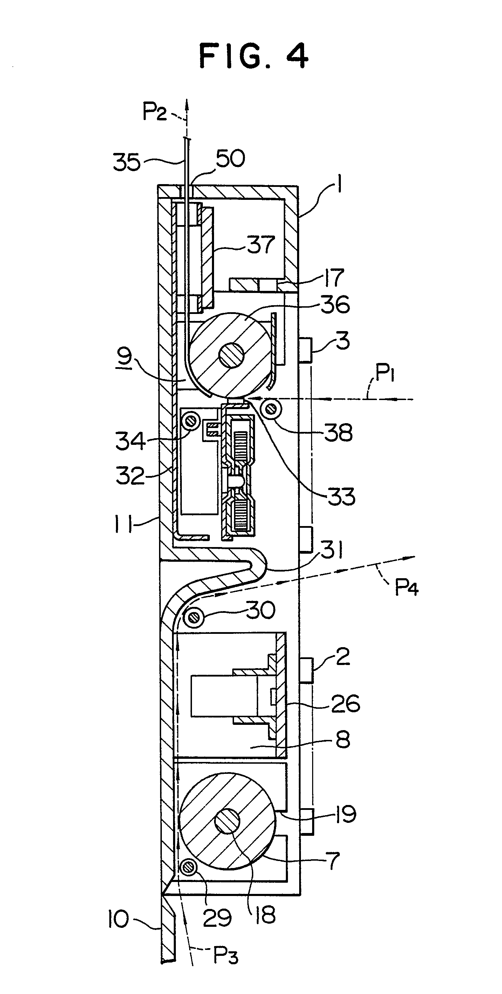

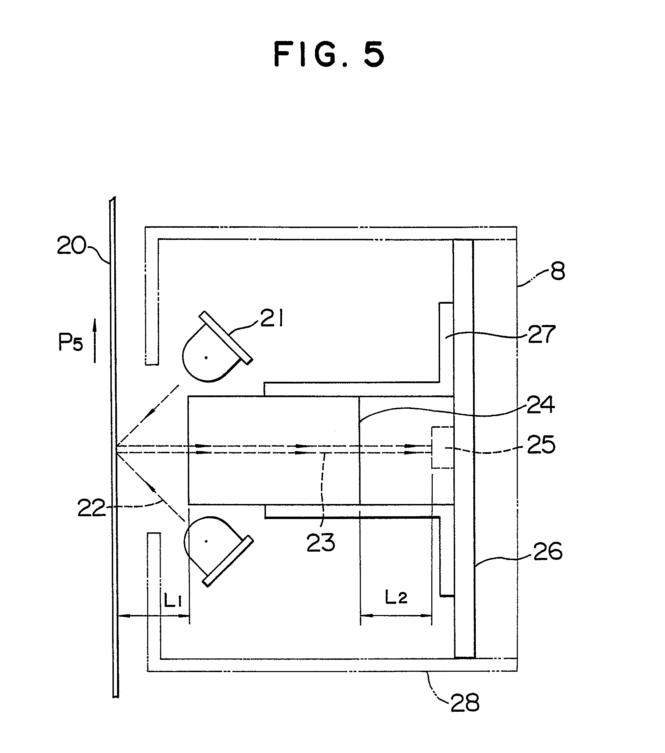

Next, a structure of the image scanner 8 will be described by referring to Figs. 4 and 5. In Fig. 4, a document paper 20 is inserted in the direction indicated by a broken line arrow $P_3$ and leaves the word processor in the direction indicated by an arrow $P_4$. Thus, in Fig. 5, the document paper 20 is transported in the direction indicated by an arrow $P_5$. The document paper 20 being transported is irradiated with a light beam 22 emitted from light emission elements (LED) 2I, wherein the reflected light rays 23 from the document 20 is transmitted to a charge-coupled device (CCD) 25 through a gradient index lens such as Selfoc lens 24 constituted by optical fibers. In this way, information of image, characters and others is inputted in the form of bit signals resulting from the photo-electric conversion and associated signal processing. It should be noted that the distance $L_1$ between one end face of the Selfoc lens 24 and the document sheet 20 is selected approximately equal to the distance $L_2$ between the other end face of the lens 24 and the CCD 25 in order to focus the light beam on the CCD.

A fixture 27 for supporting the Selfoc lens 24 and the CCD 25 are fixedly secured on a control circuit board 26 incorporating a circuit for controlling the image scanner 8. The LEDs 2I, the Selfoc lens 24 and the control circuit board 26 is covered by a cover member 28.

Guide rollers 29 and 30 for guiding the document sheet 20 are mounted so as to guide the movement of the sheet 20 along and in the vicinity of the bottom base II. A guide protrusion 3I for guiding the document paper 20 is formed integrally with the bottom base II substantially at a center portion thereof.

The printer 9 is composed of a printer base 32 disposed on the inner surface of the bottom base II, a head 33 disposed on the printer base 32, a guide shaft 34 for the head 33, a feed roller 36 for a printing sheet or paper such as postcard or the like and a control circuit board 37. A guide roller 38 is disposed in the vicinity of a feed roller 36 for transporting the printing sheet 35 in the direction indicated by the arrow $P_1$ to the direction indicated by an arrow $P_2$ (Fig. 4).

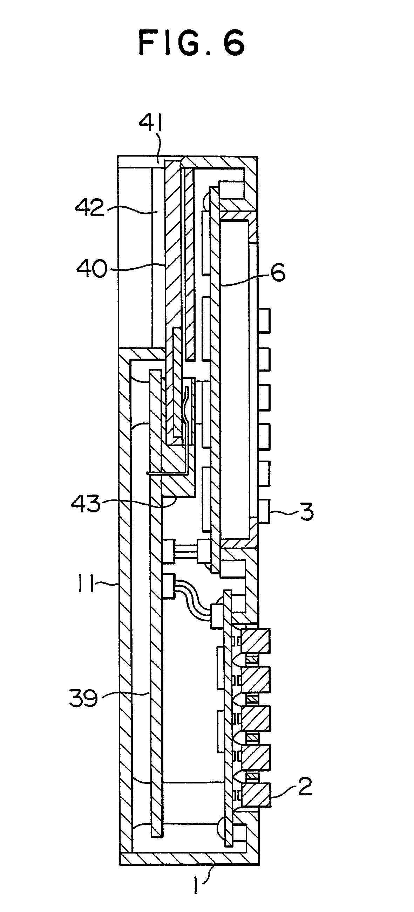

A main control circuit board 39 and a memory card 40 which constitutes an external memory are provided on the inner side of the right half portion of the main case I in which the keyboards 2 and 3, the main switch 4, the speaker perforation region 5 and the display device 6 are provided, as is shown in Fig. 6.

The memory card 40 is inserted through a notch 4I formed at the rear side of the case I and guided by guide ribs 42 formed in the bottom base II to be connected electrically and mechanically to a connector 43 mounted on the main control circuit board 39.

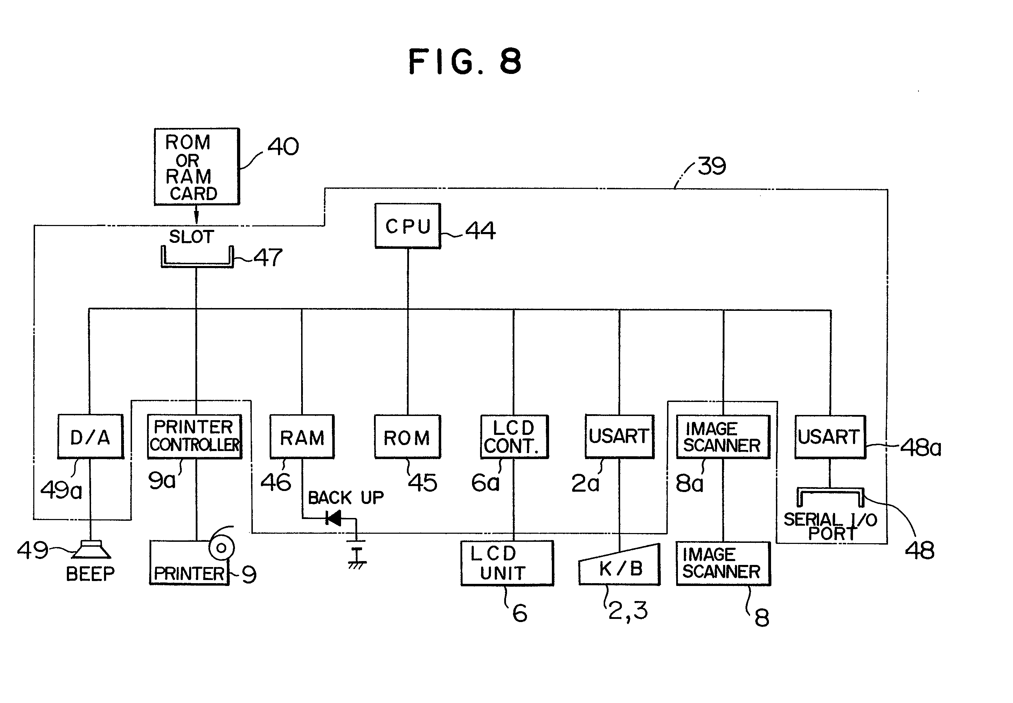

Also referring to Fig. 8, the main control circuit board 39 has incorporated therein a microprocessor (CPU) 44 for controlling the multi-function personal word processor as a whole, a memory (ROM) 45 for storing programs, a temporary storage memory (RAM) 46, an expanded slot 47 for the memory card 40, an input/output device (serial I/O) 48 for connecting a communication modem or the like, a LSI 48b for controlling the input/output device 48 and other LSIs for controlling other components which may include a buzzer 5a, the display device 6 and the keyboards 2 and 3. LSIs 5b, 6b, 2b and 3b for controlling these components are incorporated in the main control circuit board 39. A LSI 9b for controlling the printer 9 is incorporated in the control base plate 26. Further, a LSI 8b for controlling the image scanner 8 is incorporated in the control circuit board 26.

The display device 6 is so orientated that the longitudinal axis thereof extends from the front to the rear side in conformance with the vertical writing style of Japanese language. With such arrangement, the image of a document to be finally created can be observed already at the stage of the display of the data being inputted.

The paper roller 7 is formed of a single elongated paper strip wound in many turns. When the paper is required for writing memorandum, the tip end of the paper sheet wound in the form of the paper roller 7 is picked and withdrawn to be written with a writing tool while being supported on the rear surface of the cover l0. The paper roller 7 is ordinarily covered by the cover l0 so that the paper roller 7 is protected from being injured in the course of transportation of the word processor. Further, the covering with the cover l0 enhances aesthetically the outer appearance of the word processor.

The printer 9 is disposed longitudinally. The printing sheet 35 having been printed by the printer 9 can be discharged through a discharge port 50 provided on the rear side (upper side in Fig. 4) of the main body case l. This arrangement is preferred when the postcard is used as the printing sheet 35. More specifically, since the postcard is fabricated of a paper sheet having a greater rigidness than that of the normal printing sheet, it is preferred that the magnitude of bending of the postcard be set at minimum at the printing operation while the card being able to be bent along a line orthogonal to the longitudinal direction of the card. Further, in view of the fact that the postcard is ordinarily used for the vertical writing, the postcard should preferably be so disposed that the longitudinal axis thereof extends from the front to rear side of the main body case l as viewed from the front side thereof so that the printed quality can be visually verified in the course of printing operation. The two requirements mentioned above can be satisfied by transporting the postcard from the top side (right-hand in Fig. 4) to the rear side of the main case, as shown in Fig. 4. Further, with the arrangement in which the postcard is discharged from the rear side of the main body case l, the postcard can be protected from being injured through contact with the user who in turn can feel no discomfort.

The amount of the printing sheet 35 to be wound around the feed roller 36 is recommended to be about l/4 of one turn. Thus, when the postcard is used as the printing sheet 35, the postcard can be protected against injury.

The memory card 40 stores therein read-only basic programs such as system software, word-processor function software, tabulation software and the like. Further, the memory card can be used for recording the images created by the user.

With the arrangement described above, characters and/or patterns of predetermined forms and types inputted through the keyboards 2 and/or 3 can be displayed on the screen of the display device 6. By entering a print command through the keyboards 2 and 3, the printer 9 is actuated, whereby the content of the inputted character/ pattern information is printed on the printing sheet 35 such as the postcard through operation of the printer 9.

On the other hand, when a hand-written manuscript 20 is loaded in below the paper roller 7 after opening the cover l0, the manuscript paper 20 is transported in the direction indicated by an arrow $P_4$ from the direction indicated by the arrow $P_3$, as shown in Fig. 4. In the course of transportation, the contents of the manuscript 20 is picked up by the image scanner 8 to be displayed on the screen of the display device 6. The contents of the manuscript 20 can be printed on the printing sheet 35 through operation of the printer 9 by entering a corresponding print command through the keyboards 2 and/or 3.

When the characters and/or graphic patterns of predetermined forms inputted through the keyboards 2 and 3 are to be printed in combination with hand-written letters and/or graphic patterns inputted through the image scanner 8, the contents picked up by the image scanner 8 is first displayed on the screen of the display device 6. Subsequently, by displaying the desired characters and/or graphic patterns of the predetermined forms on the screen of the display device through manipulation of the keyboards 2 and 3 while observing the image being displayed, edition of the scanned input information with the keyboard input information can be effectuated in an arbitrary manner. Upon completion of the edition on the display screen, the print command is entered through the keyboards 2 and/or 3 to actuate the printer 9, whereby the printing of the printing sheet 35 such as the postcard is carried out.

Next, a second embodiment of the present invention will be described by reference to Figs. 9 to l4.

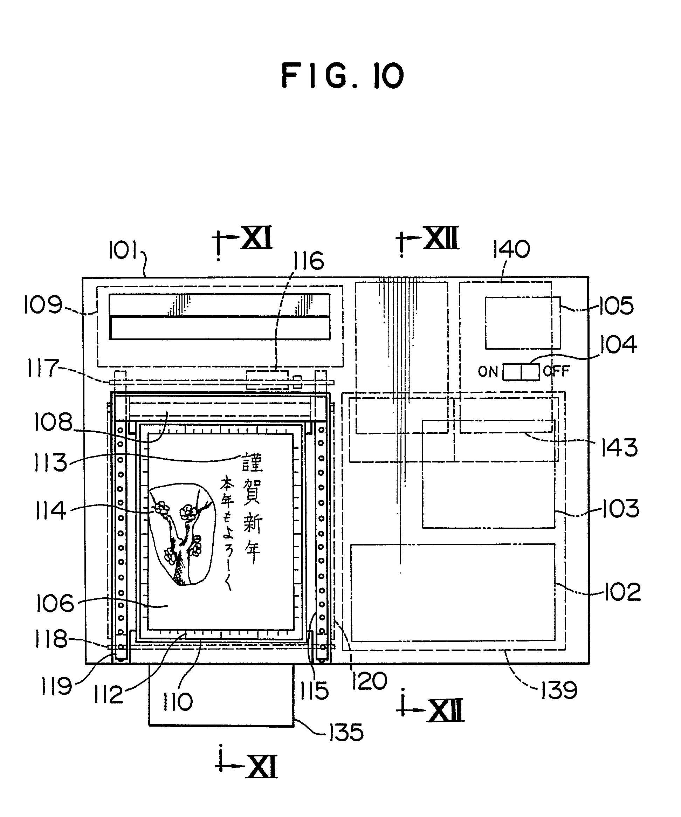

Referring to these figures and in particular to Figs. 9 and 10, there are disposed in the main body case 101 of a multi-function personal word processor at a right half portion as viewed from the front side a keyboard 102 for inputting characters and signs or symbols, a keyboard 103 for inputting numerals, a main switch 104 and a perforated field 105 for a speaker in this order. In the left half portion of the main body case 101, there are disposed a display device 106 and a printer 109 in this order as viewed from the front side.

The display screen 107 of the display device 106 is positioned to be lower than the level of the keyboards 102 and 103. The image reading device for reading various information on the screen 107 of the display device 106 is constituted by an image scanner 108 which is adapted to move over the screen 107 of the display device 106. In the case of the illustrated embodiment, the display screen 107 is dimensioned to accommodate the size of the postcard. A scale 112 is provided on the upper surface of the supporting fixture 110 supporting the display screen 107.

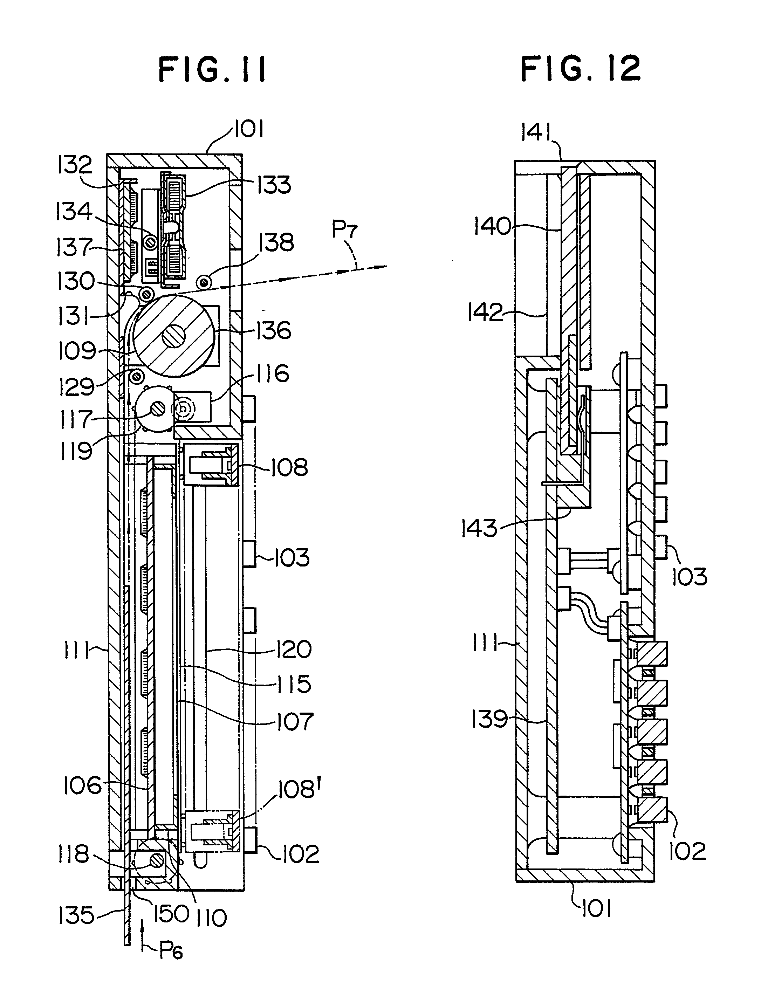

Referring to Fig. 11, the image scanner 108 is fixedly mounted on a belt 115 to be transported thereby. More specifically, as the belt 115 is moved by driving a motor 116, the image scanner 108 which is normally located at a stationary position indicated by a solid line in Fig. 11 is transported to a position indicated by a single-dot broken line while scanning the image on the screen 107 of the display device 106. Upon completed scanning operation, the motor 116 is driven in the reverse direction to return the image scanner 108 to the position indicated by the solid line in Fig. 11. The belt 115 runs around four pulleys 119 mounted on both ends of shafts 117 and 118, respectively. By transmitting the torque generated by the motor 116 to the shaft 117 by way of a gear train, the pulleys 119 has an outer peripheral surface formed with a number of projections which engage with a number of bores formed in the belt 115. Formed in the main body case 101 on both sides of the image scanner 108 are elongated grooves 120 which serve for guiding the image scanner 108 upon scanning the image screen 107 of the display device.

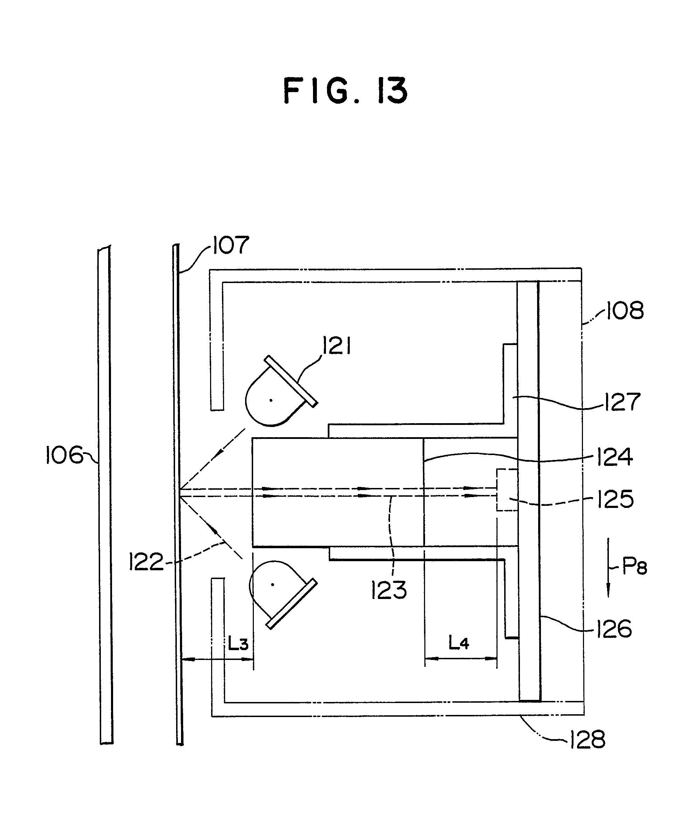

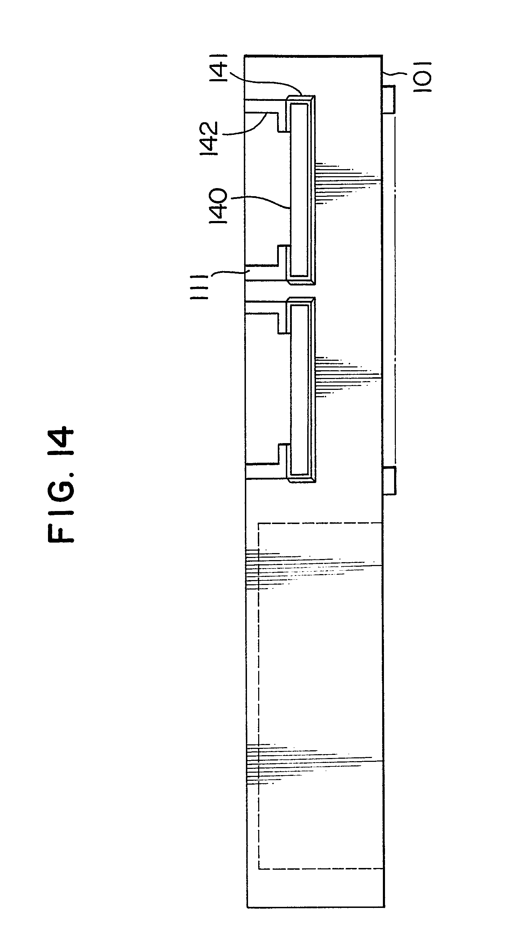

As is shown in Fig. 13, in the course of movement in the direction indicated by an arrow $P_8$, the image scanner 108 directs light rays 122 emitted by the LEDs 121 serving as the light emission elements to the display screen of the display device 106, wherein the reflected light rays are focused through the Selfoc lens 124 constituted by an optical fiber or the like onto the charge-coupled device or CCD array 125, as the result of which the information of picture, characters and others is converted into bit signals. The distance $L_3$ between one end face of the Selfoc lens 124 and the document sheet 120 is selected to be approximately equal to the distance $L_4$ between the other end face of the Selfoc lens 124 and the CCD array 125.

Disposed on a control circuit board 126 for controlling the image scanner 108 are a metal fixture 127 for supporting the Selfoc lens 124, the CCDs 125 and various control elements. The parts including the LED 121, the Selfoc lens 124, the CCD 125, the supporting fixture 127 and the control circuit board 126 are covered by a shield member 128 for preventing leakage of light and also protecting the parts from dust.

A printing sheet 135 such as a postcard is fed from an elongated slot 150 formed in the front side of the main body case 101 to the printer 109 along the bottom inner surface of the display device 106. The printing sheet 135 is guided in the direction indicated by an arrow $P_7$ shown in Fig. 11 through cooperation of a protrusion 131 formed integrally with the base or bottom wall 111 of the main body case 101 and guide rollers 129, 130 and 138.

The printer 109 comprises a printer base 132, a guide shaft 134 mounted on the base 132, a heat-sensitive head 133 disposed on a carriage adapted to move on and along the guide shaft 134, a feed roller 136 and a control circuit board 137 for controlling the printer 109.

Disposed on the rear side of the keyboards 102 and 103 mounted on the main body case 101 at the right half region of the top surface of the case 101 as viewed from the front side thereof are a main control circuit board 131 and a memory card 140 which serves as an external storage. This memory card 140 is adapted to be connected to a connector 134 provided in the main control circuit board 139 through a notch 141 provided in the rear side of the main body case 101 and a guide member 142.

The display device 106 is implemented in the form of a flat panel display such as liquid crystal, electro-luminescent (EL), plasma or the like display device. Manuscript may be written on the display screen of the display device 106 by means of a pen or alternatively a document paper may be stuck to the display screen to thereby allow the corresponding information to be inputted through the image scanner.

With the arrangement described above, characters and/or graphic patterns of predetermined forms can be entered through the keyboards 102 and 103 to be displayed on the screen of the display device 106. The contents of the character and/or pattern information are printed on a printing paper 135 such as postcard through actuation of the printer 109.

On the other hand, the hand-written document or a printed matter adhered onto the screen of the display device 106 may be scanned by the image scanner 103, whereby the information carried by the hand-written manuscript or the printed matter can be inputted. By disposing a piece of printed matter on the display screen in the state in which the contents entered through the keybaords 102 and/or 103 are being displayed and scanning the display screen with the image scanner, the contents corresponding to the combination of the information inputted through the keyboards and the printed matter can be readily printed out by the printer 109.

According to the teaching of the invention incarnated in the embodiment described above, edition of a document in which the character information inputted through the keyboards and the stuck picture are present concurrently can be performed rapidly. More specifically, when edition of a document of the type mentioned above is to be performed with the hitherto known word processor, there are required two steps, i.e. a step of creating a document containing only the character information and printing out the document and a step of arraying and disposing a picture to be added. In contrast, in the case of the word processor according to the instant embodiment, the printing only of the characters is rendered unnecessary, whereby the corresponding procedure can be omitted.

Further, in the case of the hitherto known word processor, when the combination of the printed document and a picture subsequently disposed thereon is not acceptable to the user in respect to the layout of the characters, it is required to repeat re-edition only of the characters and the re-printing until the user is satisfied with the combination. However, in the case of the word processor according to the illustrated embodiment, edition can be performed by considering simultaneously the layouts of both the characters and the picture, whereby a coordinated combination can be realized rapidly. In an extreme case, a piece of picture may be stuck beforehand onto the display screen to secure a space in which the picture is to be inserted, which is then followed by determination of sentences and characters in consideration of the location of the picture.

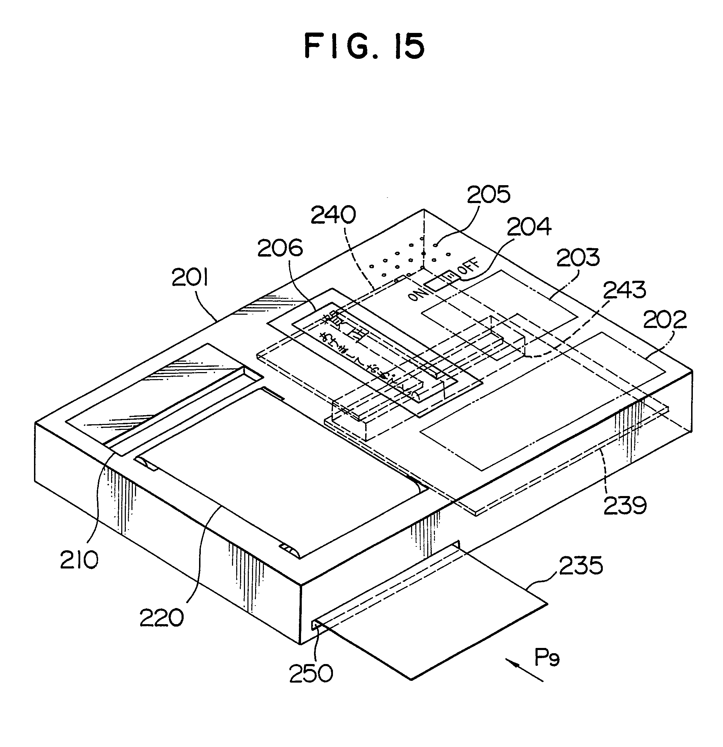

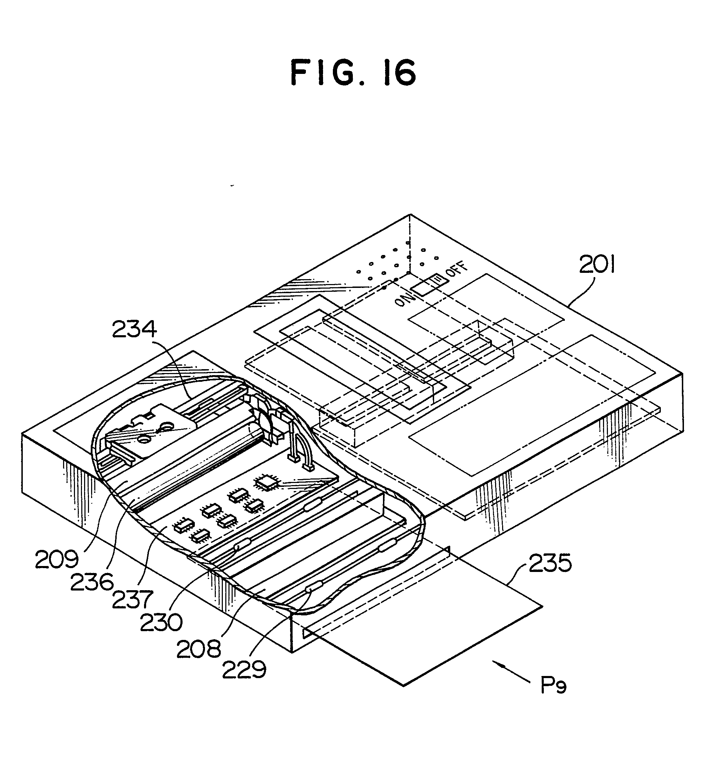

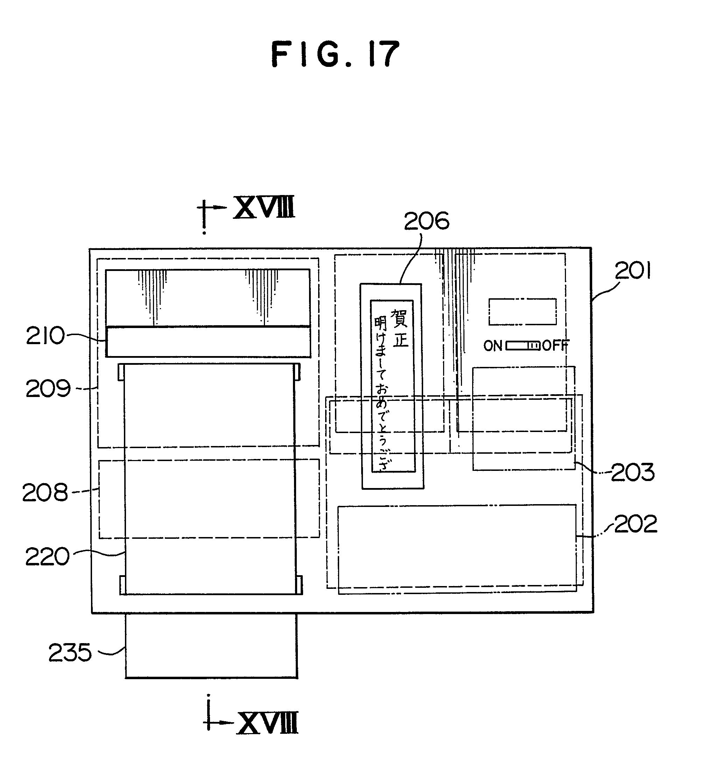

Next, a third embodiment of the present invention will be described by reference to Figs. 15 to 19.

In the figures, a reference numeral 201 denotes a main body of the multi-function personal word processor according to the instant embodiment. The main body 201 includes a keyboard 202 for inputting alphabets and Japanese kanas and a keyboard 203 for inputting numerals. More specifically, these keyboards 202 and 203 are disposed on the top of the main body 201 at the right half portion thereof in this order as viewed from the front side.

Further, a main switch 204 and a perforated region 205 for speaker are provided on the top face of the main body in the right half portion thereof to the rear side of the keyboard 203. Additionally, a liquid crystal display device 206 is provided at the right half portion of the main body 201 in such a location that the display screen thereof is positioned to the rear side of the keyboard 202. The display screen is oriented so that the longitudinal axis thereof extends from the front side to the rear side to allow vertically written manuscript to be displayed.

Disposed in the left half portion of the main body 201 as viewed in the figure are a rotatable board 220 and a discharge port 210 for printed products produced by a heat-sensitive transfer type printer 209 in this order as viewed from the front side. An image scanner 208 is provided on the inner side of the rotatable board 220 to serve as a hand-written image input device. Characters and graphic patterns can be written freely on the rotatable board by using marking ink or the like. These characters and patterns written on the rotatable board 220 can be erased in an arbitrary manner.

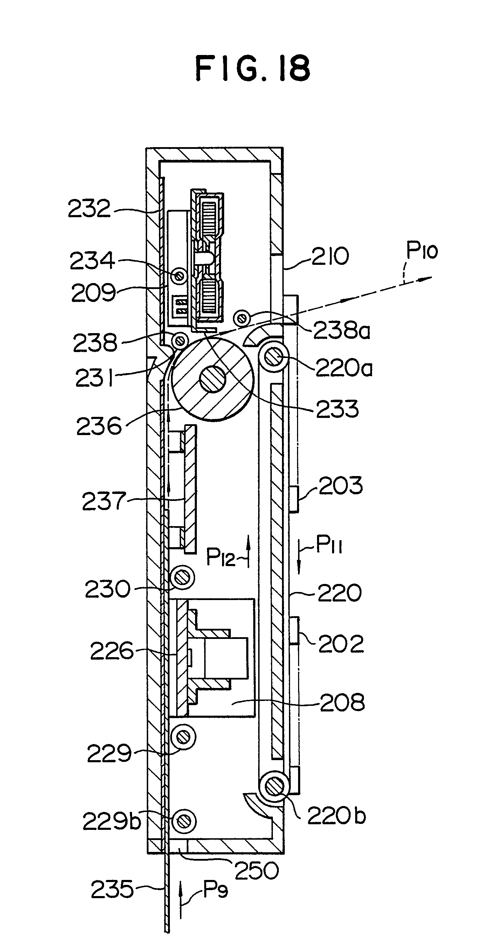

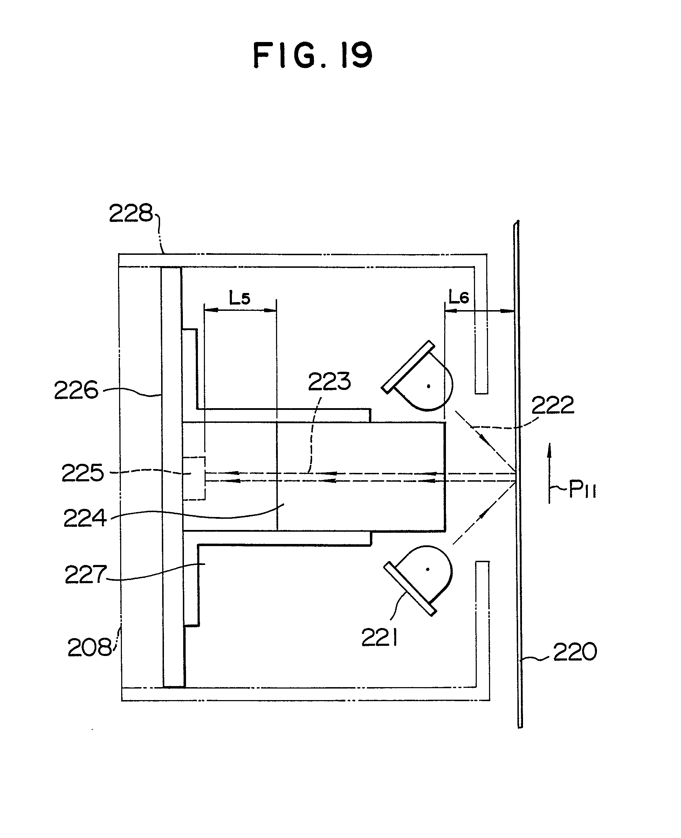

As is shown in Figs. 18 and 19, the image scanner 208 directs light rays 222 emitted from the light emission elements or LEDs 221 onto the surface of the rotatable board 220, wherein the reflected light 223 is transmitted to the charge-coupled device or CCD 225 through a Selfoc lens 224 constituted by optical fiber or the like. Thus, the hand-written characters and/or graphics on the rotatable board 220 are converted into bit signals to be inputted. The distance $L_5$ between one end face of the Selfoc lens 224 and the rotatable board 220 is selected substantially equal to the distance $L_6$ between the other end face of the Selfoc lens 224 and the CCD 225. Mounted fixedly on an IC board 226 for controlling the image scanner 208 are a Selfoc lens 224 by means of a supporting fixture 227 as well as the CCD 225 and control elements. The LED 221, the Selfoc lens 224, CCD 225 and the board 226 are covered by a shielding member 228.

A printing sheet 235 to be printed by the printer 209 is fed through an elongated slot 250 and transported to the printer 209 below the image scanner 208 by means of guide rollers 229, 229a and 230, as shown in Fig. 18. The printer 209 comprises a printer base 232, a guide shaft 234 mounted on the printer base 232, a heat-sensitive head 233 disposed on a carriage movable on and along the guide shaft 234, a feed roller 236, a control circuit board 237 and guide rollers 238 and 238a. In the vicinity of the feed roller 236, a guide projection 231 is formed integrally with the base 211 of the main body 201. The transporting direction of the printing sheet 235 is deflected from the direction indicated by an arrow $P_9$ to the direction indicated by an arrow $P_{10}$ through cooperation of the guide projection 23l, the feed roller 236 and the guide rollers 238 and 238a. The control circuit board 237 are fixedly provided with control elements for controlling the printer 209. The rotatable board 220 is rotated by the rollers 220a and 220b in the directions indicated by arrows $P_{11}$ and $P_{12}$.

With the arrangement described above, the characters and/or graphic patterns of predetermined forms inputted through the keyboards 202 and 203 are displayed on the screen of the display device 206. The contents of the input information are printed on a printing sheet such as postcard by the printer 209 actuated in response to a printing command inputted through the keyboard 202 and/or 203.

On the other hand, the rotatable board 220 is rotated after characters and/or graphic patterns have been written in an arbitrary manner. The contents of the information carried by the characters and/or patterns written on the rotatable board 220 is picked up by the image scanner 208 to be displayed on the screen of the display device. Of course, the contents of the hand-written information can be printed on the printing sheet 235 by the printer 209 by issuing a print command through the keyboards 202 and 203.

The printing sheet 235 such as postcard is loaded into the processor from the front side of the main body (along the bottom base thereof) to be transported in the direction indicated by an arrow $P_{10}$ from the direction $P_9$, as is shown in Fig. l8.

The contents inputted through the image scanner 208 and the contents entered through the keyboards 202 and 203 are displayed in combination on the screen of the display device 206. When the combined contents are to be modified, this can be accomplished by corresponding manipulation of the keyboard 202, 203 and/or modifying the contents written on the rotatable board 220. After the modification, the print command may be entered through the keyboard 202, 203, whereby the printer 209 is actuated to print out the combined contents on the printing sheet such as postcard.

## Claims

l. A multi-function personal word processor, comprising a main body (l; l06; 206) equipped with at least a keyboard (2, 3; l02, l03; 202, 203), a display device (6; l06; 206) for displaying contents of information inputted through said keyboard, and a printer (9; l09; 209) capable of printing out the contents displayed on said display device, characterized by an image scanner (8; l08; 208) capable of inputting image information of hand-written characters and/or graphic pattern, wherein the contents of information inputted through said image scanner is combined with the contents of information inputted through said keyboard to be displayed on said display device, said combined contents being printed out by said printer.

2. A multi-function personal word processor according to claim l, characterized by that the contents inputted through said image scanner can also be printed independently.

3. A multi-function personal word processor according to claim 2, characterized by that the contents inputted through said keyboard can also be printed independently.

4. A multi-function personal word processor according to claim l, characterized by that said keyboard and said display device are disposed on said main body at a right-hand portion thereof as viewed from the front side of said main body, while said image scanner and said printer are disposed at a left-hand portion of said main body as viewed from the front side thereof.

5. A multi-function personal word processor according to claim l, characterized by that a cover -(l0) is provided on said main body to cover openably said printer and said image scanner, said cover being so arranged as to be used as an underlay pad upon writing memorandum.

6. A multi-function personal word processor, comprising a main body (l0l) equipped with at least a keyboard (l02, l03), a display device (l06) for displaying contents of information inputted through said keyboard, and a printer (l09) capable of printing out the contents displayed on said display device, characterized by an image scanner (l08) capable of scanning various images produced on the screen of said display device for inputting corresponding information, wherein the content of said information inputted through said image scanner is printed by said printer.

7. A multi-function personal word processor according to claim 6, characterized by that a scale (ll2) is provided along periphery of the screen (l07) of said display.

8. A multi-function personal word processor according to claim 6 or 7, characterized by that the screen (l07) of said display device has a size selected to correspond to that of a postcard.

9. A multi-function personal word processor according to claim 6, 7 or 8, characterized by that said display device is so disposed that the display screen thereof is located at a lower position than that of said keyboard as viewed heightwise of the main body, said image scanner being arranged to move above said display screen.

l0. A multi-function personal word processor according to claim 6, characterized by that said display device is of such structure in which vertically written information can be displayed on the display screen, said printer being so arranged as to print out the content of the vertically written information on said display screen in the form of a vertically written copy.

11. A multi-function personal word processor, comprising a main body (201) equipped with at least a keyboard (202, 203), a display device (206) for displaying contents of information inputted through said keyboard, and a printer (209) capable of printing out the contents displayed on said display device, characterized by that said main body comprises a rotatable board (220) on which information can be hand-written, and an image scanner (208) for picking up the contents of the hand-written information on said rotatable board, wherein contents corresponding to a combination of the contents inputted through said keyboard and the contents inputted through said image scanner is printed out by said printer.

12. A multi-function personal word processor according to claim 11, characterized by that said keyboard and said display device are disposed at a right-hand portion of said main body in this order as viewed from the front side thereof, while said rotatable board and said printer are disposed on a left-hand portion of said main body in this order as viewed from the front side thereof.

# FIG. I

FIG. 2

# FIG. 3

本明　智

賀正　明けましておめでとう

ON ▭ OFF

9

8

7

6

1

3

2

VI

VI

# FIG. 4

# FIG. 5

# FIG. 6

FIG. 7

# FIG. 8

FIG. 9

# FIG. 10

謹賀新年
本年をよろしく

# FIG. II

# FIG. I2

# FIG. 13

# FIG. 14

0 232 905

# FIG. 15

0 232 905

# FIG. 16

# FIG. 17

↑← **XVIII**

206

201

210

209

賀正
明けましておめでとうござ

ON ▭ OFF

203

208

202

220

235

↓←**XVIII**

# FIG. 18

# FIG. 19